# EUROPEAN PATENT APPLICATION

(11) **EP 4 748 661 A1**
(43) Date of publication of application: **27.05.2026**
(21) Application number: 25210089.6
(22) Date of filing: 21.10.2025
(51) Int. Cl.: B60T 1/06, B60T 11/18, B60T 13/04, B60T 13/10

(54) **TRACTOR**

(30) Priority: 20.11.2024 IT 202400026142
(71) Applicant: Same Deutz-Fahr Italia S.p.A., 24047 Treviglio (Bergamo) (IT)
(72) Inventor: MILLER, Florian, 24047 Treviglio (Bergamo) (IT); FISCHBACH, Konrad, 24047 Treviglio (Bergamo) (IT); GAVINA, Giorgio, 24047 Treviglio (Bergamo) (IT); GATTI, Mario, 24047 Treviglio (Bergamo) (IT)
(74) Representative: Gamba, Alessandro

(57) **Abstract**

The invention is a tractor (1) comprising a front axle (2) comprising two front wheel groups (21, 22) and a rear axle (3) comprising two rear wheel groups (31, 32), a drive system (4) comprising a drive shaft (40) operatively connected to the front wheel groups (21, 22) and to the rear wheel groups (31, 32) to transmit motion thereto.

The tractor (1) further comprises parking brake means (11) operating with the drive system (4) to prevent the transmission of motion to the front wheel groups (21, 22) and to the rear wheel groups (31, 32).

Said parking brake means (11) comprise a control element (110), for example a button or a lever, actuatable by the user, and a drum group (111) engaged with the drive shaft (40). Said drum group (111) is configured in a normal braking condition, in which the rotation of the drive shaft (40) is prevented, and is controllable to an open position upon actuation of the control element (110), in which the rotation of the drive shaft (40) is allowed.

## Description

The subject of the present invention is a tractor.

In the following description, the term "tractor" refers to large-sized vehicles generally intended for the execution of power actions.

The term "wheel group" refers to all types of wheels, without any limitation to the types of tyres and rims, whether single or twin.

In the known art, tractors suitable for moving on roads or on work surfaces are known.

In the state of the art, significant focus has been placed on the modes of movement of the tractor, and of particular importance are also the braking and especially the parking modes of the tractor.

In particular, movement, but at the same time braking and parking of the tractor must be performed with maximum effectiveness and maximum efficiency while ensuring maximum safety for the user of the tractor. That is to say, the tractor must meet specific user requirements, fully complying with specific standards of the industrial sector.

The purpose of the present invention is to implement a tractor in which all the aforesaid aspects and requirements are fully and satisfactorily addressed.

This purpose is achieved by a tractor implemented in accordance with claim 1. The claims dependent thereon describe further preferred embodiments.

The features and advantages of the tractor according to the present invention will be evident from the description provided below, given by way of example and without limitation, in accordance with the accompanying figures, in which:

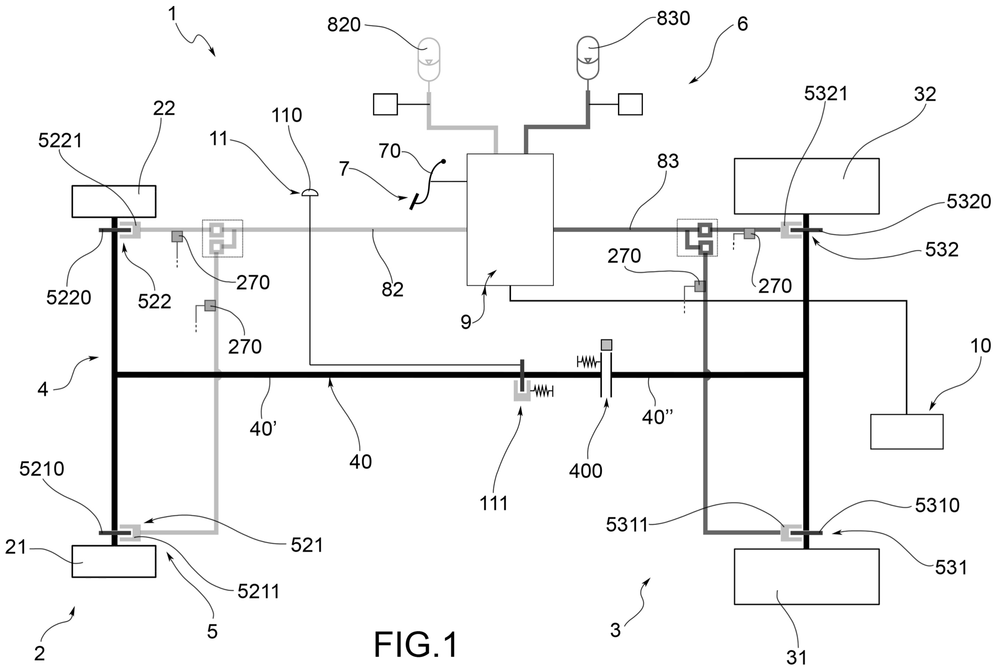

- Figure 1 shows a schematic representation of the tractor in accordance with the present invention;

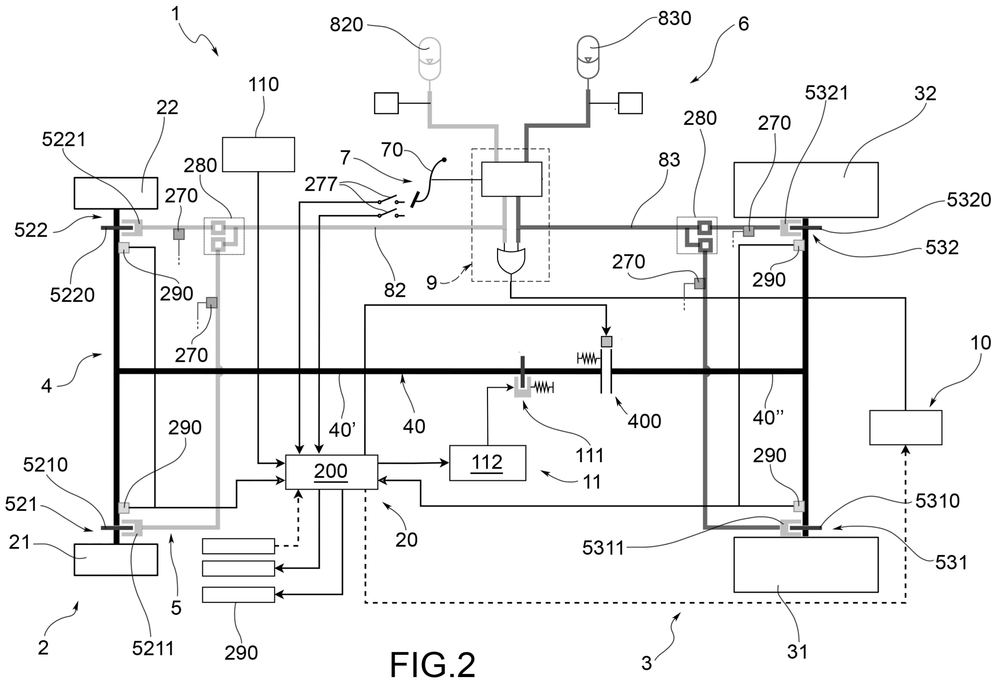

- Figure 2 shows a further schematic representation of the tractor in accordance with the present invention;

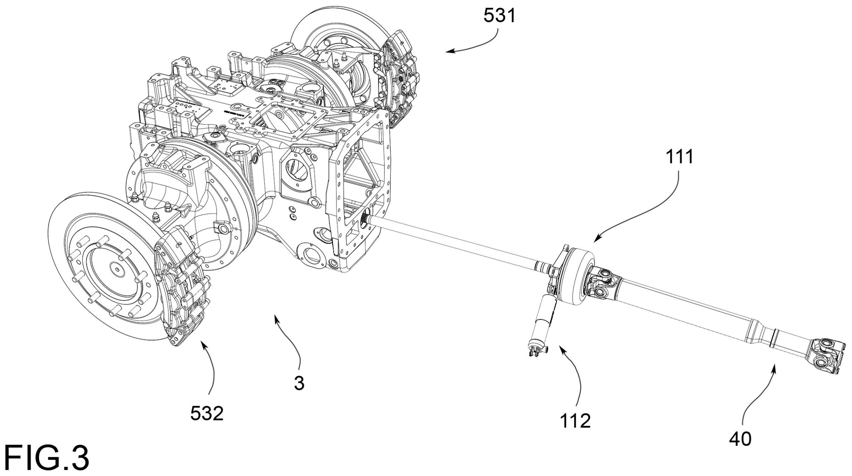

- Figure 3 illustrates a perspective view of some components of the tractor of the schematics in figures 1 and 2;

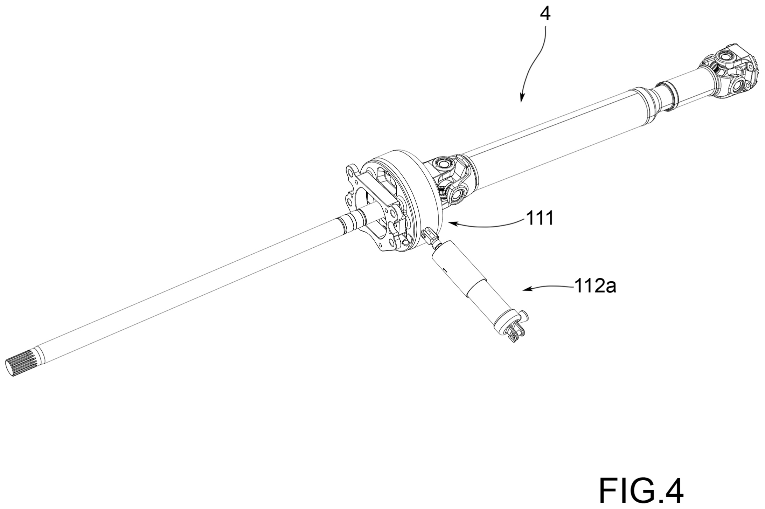

- Figure 4 illustrates a perspective view of a subgroup of components of the tractor of figure 3;

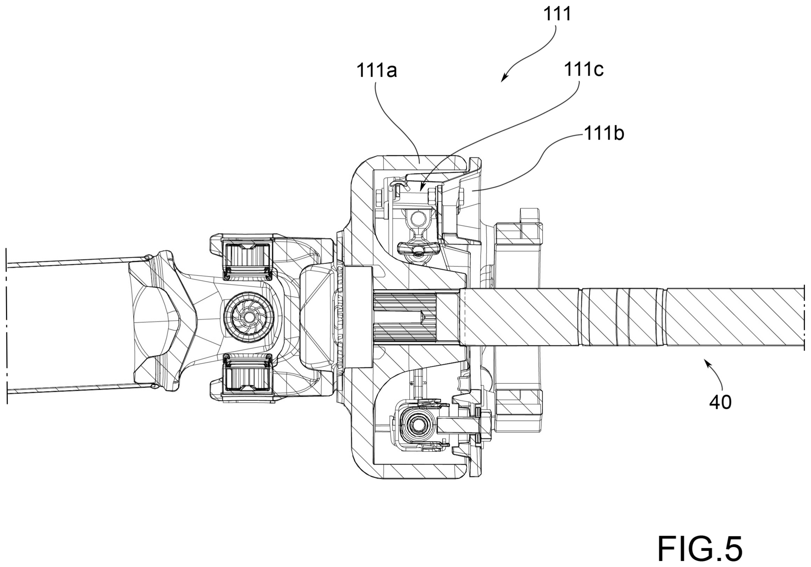

- Figure 5 shows a sectional view of the subgroup of components of the tractor of figure 4;

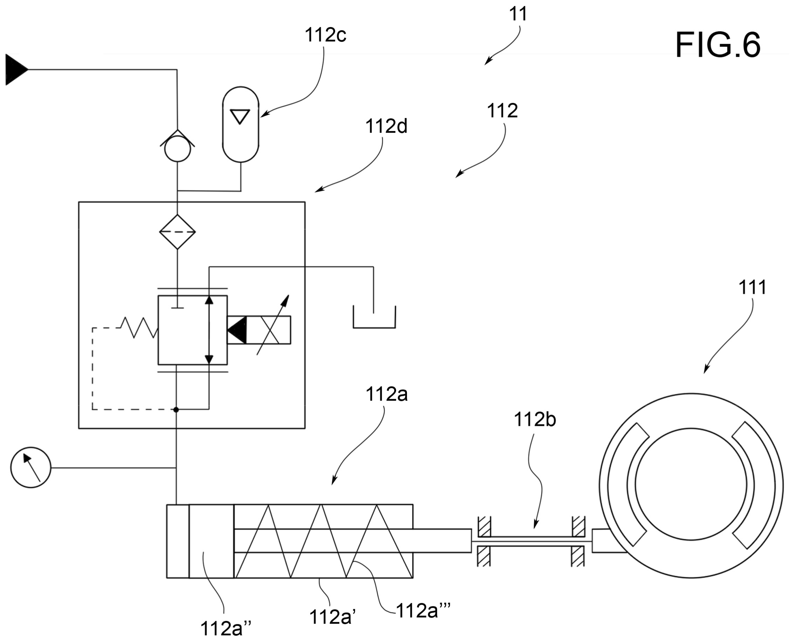

- Figure 6 is a schematic representation of the parking brake means, according to a preferred embodiment, comprised in the tractor forming the subject of the present invention.

In accordance with the accompanying figures, the number 1 denotes a tractor as a whole.

Preferably, the tractor 1 has a longitudinal axis, along the direction of straight-line advancement, defining a front region and a rear region.

The tractor 1 comprises a front axle 2 comprising two front wheel groups 21, 22, one left and one right.

The tractor 1 comprises a rear axle 3 comprising two rear wheel groups 31, 32, one right and one left.

Preferably, the front axle 2 is steerable.

Preferably, the rear axle 3 is steerable.

Preferably, the steering modes of the front axle 2 and/or the rear axle 3 do not limit the present invention.

According to a preferred embodiment, the front wheel groups 21, 22 are suspended.

Preferably, the suspension modes of the front axle 2 and of the rear axle 3 do not limit the present invention.

According to the present invention, the tractor 1 comprises a drive system 4 operatively connected to the front wheel groups 21, 22 and to the rear wheel groups 31, 32 to transmit motion thereto.

In other words, tractor 1 is all-wheel drive. Specifically, upon command by the user, the tractor 1 is suitable for moving with all four-wheel groups driving. Preferably, upon command by the user, the tractor 1 is suitable for moving with a single driving axle, in particular the rear axle.

According to a preferred embodiment, the drive system 4 comprises a drive device suitable for producing a driving action, for example one or more combustion engines or hybrid or electric engines.

Furthermore, in accordance with the present invention, the drive system 4 comprises a drive shaft 40. Preferably, said drive shaft 40 is engaged with the front axle 2 and the rear axle 3.

According to a preferred embodiment, the drive shaft 40 comprises a connection member 400 which, in the closed configuration, transmits the driving action produced by the drive device to the drive shaft 40 and thus to the front axle 2 and the rear axle 3.

According to a preferred embodiment, the connection member 400 is a clutch.

Preferably, the drive shaft 40 comprises a front shaft 40', operatively connected to the front axle 2, and a rear shaft 40", operatively connected to the rear axle 3.

According to a preferred embodiment, the front shaft 40' and the rear shaft 40" are mutually connected by said connection member 400.

According to a preferred embodiment, the tractor 1 comprises a braking system 5 comprising a pair of front brake groups 521, 522 and a pair of rear brake groups 531, 532.

Each front brake group 521, 522 comprises a front disc 5210, 5220 engaged with a respective front wheel group 21, 22 for rotating in unison.

Furthermore, each front brake group 521, 522 comprises a front caliper 5211, 5221 operating on the front disc 5210, 5220. In particular, upon actuating the closing of the front caliper 5211, 5221, the rotation of the front disc 5210, 5220, and thus of the respective front wheel group 21, 22, is slowed or prevented.

Each rear brake group 531, 532 comprises a rear disc 5310, 5320 engaged with a respective rear wheel group 31, 32 for rotating in unison.

Furthermore, each rear brake group 531, 532 comprises a rear caliper 5311, 5321 operating on the rear disc 5310, 5320. In particular, upon actuating the closing of the rear caliper 5311, 5321, the rotation of the rear disc 5310, 5320, and thus of the respective rear wheel group 31, 32, is slowed or prevented.

In accordance with the above, the front brake groups 521, 522 and the rear brake groups 531, 532 are dry-type. That is to say, the aforesaid calipers act directly on the respective discs.

Furthermore, the braking system 5 comprises control means 6 comprising a pedal group 7 operable by the user.

In a preferred embodiment, the pedal group 7 comprises a single brake pedal 70.

In other words, the pedal group 7 comprises only one pedal, namely the single brake pedal 70, suitable for being pressed by the user to perform the braking action.

According to the present invention, moreover, the braking system 5 comprises a front hydraulic circuit 82 operatively connected to the pair of front calipers 5211, 5221 and a rear hydraulic circuit 83 operatively connected to the pair of rear calipers 5311, 5321.

Preferably, the front hydraulic circuit 82 comprises a front hydraulic accumulator 820.

Preferably, the rear hydraulic circuit 83 comprises a rear hydraulic accumulator 830.

In other words, the braking system 5 comprises two distinct circuits.

In other words, the two distinct circuits do not influence one another.

Preferably, the two hydraulic circuits are designed and calibrated based on the requirements and the desired front braking action and the desired rear braking action, i.e., based on the sizes of discs and calipers.

Preferably, the two hydraulic circuits are suitable for allowing the management of the ABS action of the tractor.

According to the present invention, the braking system 5 comprises a valve group 9 operatively connected to the pedal group 7, and fluidically connected to the two distinct said front hydraulic circuit 82 and rear hydraulic circuit 83.

In particular, said valve group 9 is suitable, as described below, for effectively operating with the circulation of the quantities of oil circulating in the front hydraulic circuit 82 and/or in the rear hydraulic circuit 83.

According to a preferred embodiment, the valve group 9 is configured to control the rear hydraulic circuit 83 and/or the front hydraulic circuit 82 to carry out the braking action according to the needs or conditions of movement or parking of the vehicle.

As an example, mention is made of the case in which a malfunction occurs in the pair of front brake groups 521, 522, in which situation the valve group 9 controls the rear hydraulic circuit 83 to carry out the braking action.

According to a preferred embodiment, the valve group 9 is of the type comprising a plurality of valve members depending on the number of hydraulic circuits connected thereto. Preferably, the valve group 9 comprises a valve member suitable for managing the oil circulation in the front hydraulic circuit 82, and a valve member suitable for managing the oil circulation in the rear hydraulic circuit 83.

According to a preferred embodiment, the tractor 1 further comprises an auxiliary hydraulic circuit 10 connectable to a trailer to transmit the braking action thereto. According to a preferred embodiment, the trailer comprises a dedicated brake valve group connectable with said auxiliary hydraulic circuit 10 to receive the braking action.

Preferably, said auxiliary hydraulic circuit 10 is operatively connected to the front hydraulic circuit 82 and to the rear hydraulic circuit 83.

According to a preferred embodiment, the auxiliary hydraulic circuit 10 transmits the braking action to the auxiliary hydraulic circuit 10 by drawing from the hydraulic actuation of the front hydraulic circuit 82 and that of the rear hydraulic circuit 83 greater, whichever is greater.

According to a preferred embodiment, the valve group 9 is fluidly connected to the auxiliary hydraulic circuit 10 in such a manner as to receive the actuation from the pedal group 7.

According to a preferred embodiment, the auxiliary hydraulic circuit 10 receives the actuation through the control unit 200.

Preferably, the valve group 9 comprises a valve member suitable for managing the oil circulation in the auxiliary hydraulic circuit 10 as a function of the command imparted to the front hydraulic circuit 82 and the rear hydraulic circuit 83.

According to the present invention, the tractor 1 further comprises parking brake means 11 operating with the drive system 4 to prevent the transmission of motion to the front wheel groups 21, 22 and the rear wheel groups 31, 32.

Preferably, the parking brake means 11 comprise a control element 110, for example a button or a lever, actuatable by the user, and a drum group 111 engaged with the drive shaft 40.

Preferably, upon actuation of the control element 110, the drum group 111 is configured in a closed configuration which prevents the rotation of the drive shaft 40.

According to the invention, upon actuation of the control element 110, the drum group 111 is configured in a closed configuration which prevents the rotation of the drive shaft 40.

According to a preferred embodiment, the parking brake means 11 comprise a hydraulic parking circuit 112, and the drum group 111 is configured in a normal braking condition and is controllable to an open position by a hydraulic action of the hydraulic circuit 112.

According to a preferred embodiment, in the absence of hydraulic action from the hydraulic circuit 112, the drum group 111 is configured in a normal braking condition, that is, closed, and therefore performs braking.

That is to say, during the movement of the vehicle, the drum group 111 is controlled into an open configuration, whereas when necessary, for example in vehicle parking situations, by means of the control element 110, the drum group 111 is left in its normal closed configuration.

According to a preferred embodiment, the hydraulic parking circuit 112 comprises a piston unit 112a and a cylinder 112a' housing a piston 112a" and a spring 112a‴.

Preferably, the piston 112a" is operatively connected to the drum group 111 in such a manner that a first position of the piston 112a" corresponds to the drum group 111 in braking position, whereas a second position of the piston 112a" corresponds to the drum group 111 in an open position.

According to a preferred embodiment, the spring 112a‴ maintains the piston 112a" in said first position. Preferably, therefore, the hydraulic actuation of the piston 112a" must be such as to overcome the action of the spring 112a‴.

According to a preferred embodiment, said hydraulic parking circuit 112 comprises a connection cable 112b between the piston unit 112a, preferably the piston 112a", and the drum group 111.

According to a preferred embodiment, said hydraulic parking circuit 112 comprises an accumulator circuit 112c.

According to a preferred embodiment, said hydraulic parking circuit 112 comprises a hydraulic valve group 112d suitable for controlling the flow of oil to control the change of position of the drum group 111, bringing it from the normal braking condition, i.e. closed, to the open condition.

According to a preferred embodiment, the drum group 111 is coaxial with the drive shaft 40, comprising a rotating member 111a integral with the drive shaft 40, a fixed member 111b, and friction elements 111c positioned between the rotating member 111a and the fixed member 111b.

Preferably, in the braking configuration, said friction elements 111c are positioned so as to engage the rotating member 111a with the fixed member 111b by locking the rotation of the rotating member 111a and thus of the drive shaft 40.

According to a preferred embodiment, said friction elements 111c are movable in radial direction.

According to a preferred embodiment, the drum group 111 is engaged with said front shaft 40'.

According to a preferred embodiment, the parking brake means 11 are suitable for operating with the connection member 400 in a closed configuration. That is to say, the parking brake means 11 are suitable for operating following the closure of the connection member 400 in such a manner as to discharge the parking action both on the front shaft 40' and on the rear shaft 40".

According to a preferred embodiment, the tractor 1 comprises a control system 20 comprising a control unit 200, ECU or control unit. Preferably, said control system 20 is operatively connected to the braking system 5, to control the braking action of the tractor 1.

According to a preferred embodiment, said control system 20 is operatively connected to the valve group 9.

According to a preferred embodiment, said control system 20 is operatively connected to the parking brake means 11.

According to a preferred embodiment, said control system 20 is operatively connected to the system auxiliary hydraulic circuit 10.

According to a preferred embodiment, the control system 20 also comprises pressure sensors 270 suitable for detecting the pressure of the front hydraulic circuit 82 and the pressure of the rear hydraulic circuit 83. Preferably, the pressure sensors 270 are suitable for detecting the distinct pressures of the distinct circuits.

Preferably, said pressure sensors are at least two, one operatively connected with the front hydraulic circuit 82 and one operatively connected with the rear hydraulic circuit 83.

Preferably, each branch comprises a respective pressure sensor.

According to a preferred embodiment, the control system 20 also comprises solenoid valves 280 suitable for adjusting the right and left actuations.

According to a preferred embodiment, the control system 20 comprises at least two pedal position sensors 277 engaged with the pedal group 7, in particular with the single pedal 70, suitable for detecting the pressure applied by the user on the single pedal 70. Preferably, said two pedal position sensors 277 operate in parallel with the pedal 70. Preferably, each pedal position sensor 277 is a switch.

According to a preferred embodiment, the control system 20 also comprises at least one speed sensor 290.

Preferably, the detection of the vehicle speed by the speed sensor 290 provides an input to the control system 20 by means of which it commands an action of the braking system 5.

Innovatively, the tractor forming the subject of the present invention enables the achievement of the objective set out by the invention.

Advantageously, the tractor performs effective, efficient, and safe braking.

Advantageously, the tractor is suitable for performing "intelligent" braking actions: for example, the tractor is suitable for performing a safe braking action without locking or skidding, i.e., according to an ABS mode; for example, the tractor is suitable for performing a safe braking action without imbalance between the right wheels and the left wheels, i.e., according to an ESP mode.

Advantageously, the tractor effectively manages the parking of the vehicle.

Advantageously, the parking brake means act directly on the transmission system by inhibiting its actuation and preventing the rotation of the drive shaft, which being connected to both the front axle and the rear axle, blocks the rotation of all four-wheel groups. Advantageously, the parking brake means operate on all four wheel groups.

Advantageously, the hydraulic management of the parking brake means is separate from the circuitry operating on the four wheel groups.

Advantageously, the parking brake means are easy to manage and maintain.

Advantageously, the parking brake means are separate from the other braking elements and are usable if necessary in the event of an emergency.

Advantageously, the drum group is actuated with a single braking torque.

Advantageously, the drum group is compact.

Advantageously, the drum group is radially located proximally to the drive shaft.

It is clear that a person skilled in the art, in order to meet contingent requirements, could make modifications to the invention, all of which are within the scope of protection defined by the following claims.

## Claims

1. A tractor (1) comprising a front axle (2) comprising two front wheel groups (21, 22) and a rear axle (3) comprising two rear wheel groups (31, 32), a drive system (4) comprising a drive shaft (40) operatively connected to the front wheel groups (21, 22) and the rear wheel groups (31, 32) for transmitting motion to the front wheel groups (21, 22) and/or the rear wheel groups (31, 32), wherein the tractor (1) comprises parking brake means (11) operating with the drive system (4) to prevent the transmission of motion to the front wheel groups (21, 22) and the rear wheel groups (31, 32), wherein said parking brake means (11) comprise a control element (110), for example a button or a lever, actuatable by the user, and a drum group (111), engaged with the drive shaft (40), wherein said drum group (111) is configured in a normal braking condition, in which the rotation of the drive shaft (40) is prevented, and is controllable to an open position upon actuation of the control element (110), in which the rotation of the drive shaft (40) is allowed.

2. Tractor (1) according to claim 1, wherein said parking brake means (11) comprise a hydraulic parking circuit (112), and wherein the drum group (111) is in a closed position, i.e., in the normal braking condition, when the hydraulic action of the hydraulic circuit (112) is absent, and is controlled to an open position by a hydraulic action of the hydraulic parking circuit (112).

3. Tractor (1) according to claim 2, wherein said hydraulic parking circuit (112) comprises a piston unit (112a) and comprising a cylinder (112a') housing a piston (112a") and a spring (112a‴), wherein the piston (112a") is operatively connected to the drum group (111) so that a first position of the piston (112a") corresponds to the open drum group (111), while a second position of the piston (112a") corresponds to the closed drum group (111), wherein the spring (112a‴) keeps the piston (112a") in said first position.

4. Tractor (1) according to claim 2 or claim 3, wherein said hydraulic parking circuit (112) comprises a connection cable (112b) between the piston unit (112a) and the drum group (111).

5. Tractor (1) according to any one of claims 2 to 4, wherein said hydraulic parking circuit (112) comprises an accumulator circuit (112c).

6. Tractor (1) according to any one of claims 2 to 5, wherein said hydraulic parking circuit (112) comprises a hydraulic valve group (112d) suitable for controlling the flow of oil for controlling the change of position of the drum group (111), bringing it from the normal braking condition, i.e., closed, to the open condition.

7. Tractor (1) according to any one of the preceding claims, wherein the drum group (111) is coaxial to the drive shaft (40) comprising a rotating member (111a) integral with the drive shaft (40), a fixed member (111b) and friction elements (111c) positioned between rotating member (111a) and fixed member (111b), wherein in the closing configuration said friction elements (111c) position so as to engage the rotating member (111a) with the fixed member (111b) by locking the rotation of the rotating member (111a) and thus of the drive shaft (40).

8. Tractor (1) according to any one of the preceding claims, wherein the drive shaft (40) comprises a front shaft (40'), operatively connected to the front axle (2), and a rear shaft (40"), operatively connected to the rear axle (3), and a connection member (400) suitable for mutually connecting the front shaft (40') and the rear shaft (40").

9. Tractor (1) according to claim 8, wherein the drum group (111) is engaged with said front shaft (40').

10. Tractor (1) according to any one of the preceding claims, further comprising a braking system (5) comprising:
i) a pair of front brake groups (521, 522), each front brake group (521, 522) comprising a front disc (5210, 5220) engaged with a respective front wheel group (21, 22) for rotating in unison, and a front caliper (5211, 5221) operating on the front disc (5210, 5220);
ii) a pair of rear brake groups (531, 532), each rear brake group (531, 532) comprising a rear disc (5310, 5320) engaged with a respective rear wheel group (31, 32) for rotating in unison, and a rear caliper (5311, 5321) operating on the rear disc (5310, 5320);
iii) control means (6) comprising:
- a pedal group (7) operable by the user;
- a front hydraulic circuit (82) operatively connected to the pair of front calipers (5211, 5221);
- a rear hydraulic circuit (83) operatively connected to the pair of rear calipers (5311, 5321);
- a valve group (9) operatively connected to the pedal group (7), and fluidly connected to the two distinct said front hydraulic circuit (82) and rear hydraulic circuit (83) so as to receive the actuation of the pedal group (7) and to transmit the braking action in the front hydraulic circuit (82) and the rear hydraulic circuit (83).

11. Tractor (1) according to any one of the preceding claims, further comprising a control system (20) comprising a control unit (200) operatively connected to parking brake means (11).

12. Tractor (1) according to claim 10 or claim 11, wherein the control system (20) also comprises pressure sensors (270) suitable for detecting the pressure of the front hydraulic circuit (82) and the pressure of the rear hydraulic circuit (83).

13. Tractor (1) according to any one of claims 10 to 12, wherein the control system (20) also comprises at least one speed sensor (290).
